# EUROPÄISCHE PATENTANMELDUNG

(11) **EP 2 348 597 A1**
(43) Veröffentlichungstag der Anmeldung: **27.07.2011**
(21) Anmeldenummer: 10151249.9
(22) Anmeldetag: 20.01.2010
(51) Int. Cl.: H02J 3/26, H02M 7/515

(54) **Angleichung der über die einzelnen Phasen eines mehrphasigen Wechselstroms fließenden Teilleistungen**

(71) Anmelder: SMA Solar Technology AG, 34266 Niestetal (DE)
(72) Erfinder: Umland, Andreas, 34127, Kassel (DE)
(74) Vertreter: Rehberg Hüppe + Partner

(57) **Zusammenfassung**

Zur Angleichung der Teilleistungen, die an einem Netzanschlusspunkt (1) zwischen einem mehrphasigen Wechselstromnetz (2) mit mehreren Außenleitern (9-11) einerseits und einer Anlage (3) zur Einspeisung elektrischer Energie in das Wechselstromnetz (2) mit einem mehrphasigen Wechselrichter (5) sowie an das Wechselstromnetz (2) angeschlossenen elektrischen Verbrauchern (6, 7) andererseits über die einzelnen Außenleiter (9-11) fließen, werden Unterschiede zwischen den über die einzelnen Außenleiter (9-11) fließenden Teilleistungen erfasst und durch Einspeisung unterschiedlich hoher Teilleistungen mit dem Wechselrichter (5) in die einzelnen Außenleiter (9-11) reduziert.

## Beschreibung

Die Erfindung betrifft ein Verfahren zur Angleichung der Teilleistungen, die an einem Netzanschlusspunkt zwischen einem mehrphasigen Wechselstromnetz mit mehreren Außenleitern einerseits und einer Anlage zur Einspeisung elektrischer Energie in das Wechselstromnetz mit einem mehrphasigen Wechselrichter sowie an das Wechselstromnetz angeschlossenen elektrischen Verbrauchern andererseits über die einzelnen Außenleiter fließen. Weiterhin bezieht sich die Erfindung auf eine Vorrichtung mit den Merkmalen des Oberbegriffs des unabhängigen Patentanspruchs 8. Diese Vorrichtung soll insbesondere zur Umsetzung des erfindungsgemäßen Verfahrens dienen. Zudem bezieht sich die Erfindung auf einen mehrphasigen Wechselrichter mit den Merkmalen des Oberbegriffs des unabhängigen Patentanspruchs 11. Auch dieser mehrphasige Wechselrichter soll insbesondere zur Umsetzung des neuen Verfahrens dienen.

Bei dem Netzanschlusspunkt kann es sich um einen Netzübergabepunkt handeln, an dem ein Anschluss an ein öffentliches Wechselstromnetz gegeben ist. An dem Netzanschlusspunkt kann aber auch ein lokaler Netzbildner zum Bereitstellen des Wechselstromnetzes vorgesehen sein.

Bei dem mehrphasigen Wechselstromnetz handelt es sich insbesondere um ein dreiphasiges Wechselstromnetz. Grundsätzlich ist die vorliegende Erfindung aber auch auf ein z. B. zweiphasiges Wechselstromnetz anwendbar.

Die im Rahmen der vorliegenden Erfindung betriebene Angleichung der Teilleistungen, die über die einzelnen Außenleiter fließen, schließt die Reduzierung von sogenannten Schieflasten, d. h. die unsymmetrische Belastung der Phasen eines mehrphasigen Wechselstromnetzes durch an angeschlossene einphasige Verbraucher, ein. Die vorliegende Erfindung betrachtet aber nicht nur den Fall, dass an dem Netzanschlusspunkt elektrische Leistung aus dem Wechselstromnetz entnommen wird, sondern auch, dass dort elektrische Leistung eingespeist wird. Wenn diese Einspeisung ebenfalls einphasig erfolgt, aber über eine andere Phase als die, an die die einphasigen Verbraucher angeschlossen sind, kann ohne weiteres die Situation auftreten, dass an dem Netzanschlusspunkt über ein Phase elektrische Leistung aus dem Wechselstromnetz fließt, während über eine andere Phase elektrische Leistung in das Wechselstromnetz eingespeist wird. Dies stellt einen Extremfall der sogenannten Schieflast dar.

### STAND DER TECHNIK

Es ist bekannt, einer unsymmetrischen Belastung der Phasen bei der Leistungsentnahme mit einphasigen Verbrauchern aus einem mehrphasigen Wechselstromnetz dadurch zu begrenzen, dass die einphasigen Verbraucher verteilt über die Phasen des mehrphasigen Wechselstromnetzes angeschlossen werden. Ein Erfolg tritt hierdurch jedoch nur im statistischen Mittel ein.

Bei Netzanschlusspunkten mit hohen Impedanzen zum Wechselstromnetz treten bei der Entnahme größerer Leistungen Spannungseinbrüche gegenüber der Netzspannung auf. Es ist bekannt, diesem Effekt durch sogenannte Spar-Stell-Trafos entgegenzuwirken. Im Falle einer unsymmetrischen Belastung der Phasen treten bei Netzanschlusspunkten mit hohen Impedanzen zum Wechselstromnetz Spannungsdifferenzen zwischen den Phasen auf, denen durch einen Spar-Stell-Trafo nicht begegnet werden kann.

Bei der einphasigen Einspeisung von elektrischer Energie in ein mehrphasiges Wechselstromnetz treten, wie bereits angedeutet wurde, unsymmetrische Leistungsverteilungen auf, die ebenfalls unerwünscht sind. Aus der DE 10 2006 003 904 A1 ist es bekannt, diesen Unsymmetrien dadurch zu begegnen, dass die von mehreren einphasigen Wechselrichtern in das Wechselstromnetz eingespeisten elektrischen Leistungen über die Phasen des Wechselstromnetzes verteilt werden und dass bei Ausfall eines in eine Phase einspeisenden Wechselrichters die Leistung der übrigen, in die anderen Phasen einspeisenden Wechselrichter begrenzt wird.

Aus der WO 2006/084294 A1 ist ein Wechselrichtersystem zur individuellen Einspeisung in ein dreiphasiges Wechselstromnetz bekannt. Dabei sind mehrere einphasige Wechselrichter eingangsseitig an einen Leistungsbus angeschlossen, in den mehrere Photovoltaikgeneratoren einspeisen. Die von den Photovoltaikgeneratoren in den Leistungsbus eingespeiste Leistung ändert sich je nach Sonneneinstrahlung. Daher werden die einzelnen Wechselrichter zur Einspeisung in das Wechselstromnetz je nach Bedarf kombiniert bzw. parallel geschaltet. Ebenso werden die einphasigen Wechselrichter zu drei Gruppen, also pro Phase eine Gruppe, zusammengefasst, wodurch eine Schieflast der Phasen vermieden wird.

Unter dem Produktnamen "Sunny Island" ist ein bidirektionaler Batteriewechselrichter der Anmelderin bekannt, der als Netzbildner für Inselnetze verwendbar ist und unsymmetrische Belastungen des jeweiligen Inselnetzes durch Leistungsaufnahme aus den nicht belasteten Phasen und Leistungsabgabe in die stärker belasteten Phasen kompensiert. Dieser Leistungsausgleich wird jedoch mit Leistungsverlusten innerhalb des bidirektionalen Wechselrichters erkauft.

Der eingangs angesprochene Fall einer extremen Schieflast durch Leistungsentnahme an dem Netzanschlusspunkt über eine Phase bei gleichzeitiger Leistungseinspeisung in das Wechselstromnetz über eine andere Phase ist unabhängig von der dem Wechselstromnetz dadurch aufgeprägten Schieflast von Nachteil, wenn ein Eigenverbrauch der von einem Wechselrichter eingespeisten elektrischen Leistung mit Vorteilen verbunden ist. Diese Vorteile bestehen ganz generell darin, dass ein Eigenverbrauch von vor Ort erzeugter elektrischer Leistung das Wechselstromnetz nicht belastet. Finanzielle Vorteile können hieraus resultieren, wenn die aus dem Wechselstromnetz bezogene elektrische Energie teuerer ist als die Vergütung für in das Wechselstromnetz eingespeiste elektrische Energie. Ein finanzieller Vorteil kann sich aber auch ergeben, wenn eine Prämie für den Eigenverbrauch von vor Ort erzeugter elektrischer Energie höher ist als die Differenz zwischen der Vergütung für in das Netz eingespeiste elektrische Energie und dem Preis für aus dem Netz bezogene elektrische Energie. Dies ist nach dem deutschen Erneuerbare-Energien-Gesetz in der ab dem 1. Januar 2009 gültigen Fassung (EEG 2009) gegeben. Wenn der Eigenverbrauch mit finanziellen Vorteilen verbunden ist, ist der Fall der Einspeisung elektrischer Leistung über eine Phase bei gleichzeitigem Bezug von elektrischer Leistung über eine andere Phase des Wechselstromnetzes möglichst zu vermeiden.

### AUFGABE DER ERFINDUNG

Der Erfindung liegt die Aufgabe zugrunde, ein Verfahren und eine Vorrichtung der Wechselrichter mit den Merkmalen der eingangs beschriebenen Art aufzuzeigen, mit denen ein Eigenverbrauch der vor Ort erzeugten elektrischen Leistung optimiert wird und allgemein unsymmetrische Belastungen des mehrphasigen Wechselstromnetzes an dem Netzanschlusspunkt reduziert werden.

### LÖSUNG

Die Aufgabe der Erfindung wird durch ein Verfahren mit den Merkmalen des unabhängigen Patentanspruchs 1, eine Vorrichtung mit den Merkmalen des unabhängigen Patentanspruchs 8 und einen mehrphasigen Wechselrichter mit den Merkmalen des unabhängigen Patentanspruchs 11 gelöst. Bevorzugte Ausführungsformen des neuen Verfahrens, der neuen Vorrichtung und des Wechselrichters sind in den abhängigen Patentansprüchen definiert.

### BESCHREIBUNG DER ERFINDUNG

Bei dem neuen Verfahren werden Unterschiede zwischen den über die einzelnen Außenleiter des mehrphasigen Wechselstromnetzes fließenden Teilleistungen erfasst und durch Einspeisungen unterschiedlich hoher Teilleistungen mit dem mehrphasigen Wechselrichter in die einzelnen Außenleiter reduziert. Der mehrphasige Wechselrichter wird bei der Erfindung zur Nivellierung der über die einzelnen Außenleiter fließenden elektrischen Leistungen genutzt. Er muss zu diesem Zwecke speziell ansteuerbar sein, um seine Einspeiseleistung auf die Phase bzw. den Außenleiter des Wechselstromnetzes zu konzentrieren, über die/den aktuell die größte elektrische Leistung verbraucht wird.

Dabei reicht es für die Optimierung des Eigenverbrauchs der vor Ort erzeugten elektrischen Leistung durch die auf eine/einen oder wenige Phasen bzw. Außenleiter fokussierte Einspeiseleistung des mehrphasigen Wechselrichters aus, wenn die Leistungsflussrichtungen durch die einzelnen Außenleiter an dem Netzanschlusspunkt erfasst und miteinander verglichen werden. Wenn alle Leistungsflussrichtungen identisch sind, d. h. über alle Phasen elektrische Leistung aus dem Wechselstromnetz entnommen oder in das Wechselstromnetz eingespeist wird, bedarf es keines Eingriffs. Wenn aber die Leistungsflussrichtungen, d. h. die Vorzeichen der Leistungsentnahme unterschiedlich sind, ist dieser Zustand durch selektive Einspeisung von elektrischer Leistung mit dem Wechselrichter möglichst zu beseitigen. Zu diesem Zweck muss die Dimensionierung des Wechselrichters bezüglich seiner den einzelnen Phasen des Wechselstromnetzes zugeordneten Ausgangsteilstufen gegenüber dem üblichen Bruchteil der maximalen Einspeiseleistung nicht variiert werden, wenn bei maximaler Einspeiseleistung die vor Ort erzeugte elektrische Leistung die vor Ort verbrauchte elektrische Leistung sowieso übersteigt. Wenn der mehrphasige Wechselrichter jedoch grundsätzlich kleiner dimensioniert ist, ist es von Vorteil, wenn er seine gesamte Einspeiseleistung auch bei maximaler Einspeiseleistung auf eine Phase bzw. einen Außenleiter des mehrphasigen Wechselstromnetzes konzentrieren kann.

Um mit dem neuen Verfahren auch unsymmetrische Belastungen, die keine unterschiedlichen Leistungsflussrichtungen durch die einzelnen Außenleiter des Wechselstromnetzes zur Folge haben, zu begrenzen, können die über die einzelnen Außenleiter fließenden Teilleistungen nicht nur nach ihrem Vorzeichen sondern auch nach ihrem Betrag erfasst und miteinander verglichen werden, um sie dann durch auf einzelne Außenleiter konzentrierte Einspeisungen des Wechselrichters auszugleichen.

Um die über die einzelnen Außenleiter fließenden Teilleistungen zu erfassen, können die hierüber fließenden Ströme separat erfasst und miteinander verglichen werden. Wenn an dem Netzübergabepunkt zum Wechselstromnetz hin auftretenden Impedanzen gegenüber Impedanzen zwischen dem Netzübergabepunkt und dem Wechselrichter dominieren, können aber auch die Unterschiede zwischen den an den einzelnen Außenleitern anliegenden Effektivspannungen erfasst und durch Einspeisung unterschiedlich hoher Teilleistungen in die einzelnen Außenleiter mit dem Wechselrichter reduziert werden. In diesem Fall werden die über die einzelnen Außenleiter fließenden Leistungen durch ihren Effekt auf die anliegenden Effektivspannungen miteinander vergleichen.

Es versteht sich, dass der bei dem neuen Verfahren eingesetzte Wechselrichter nicht nach dem Prinzip arbeitet, dass er seine Einspeisung von elektrischer Leistung in die anderen Phasen des Wechselstromnetzes, auf die er seine Einspeiseleistung aktuell nicht konzentrieren soll, nur drosselt, ohne seine Einspeiseleistung in die Phase, in die er aktuell konzentriert einspeisen soll, zu erhöhen. Dies setzt voraus, dass der mehrphasige Wechselrichter bezüglich seiner Einspeiseleistung in alle einzelnen Phasen des Wechselstromnetzes aus denselben Energiequellen gespeist wird oder zumindest speisbar ist. Konkret können die unterschiedlich hohen Teilleistungen mit dem Wechselrichter aus einem gemeinsamen Zwischenkreis in die einzelnen Außenleiter des Wechselstromnetzes eingespeist werden. D. h., die gesamte zur Verfügung stehende elektrische Leistung fließt über den Zwischenkreis und wird dann von dem Wechselrichter der Phase bzw. den Phasen des Wechselstromnetzes zugeordnet, in die aktuell die maximale Einspeisung elektrischer Energie sinnvoll ist. Konkret können dabei die unterschiedlich hohen Teilleistungen durch Einspeisung unterschiedlicher hoher Ströme in die einzelnen Außenleiter realisiert werden. Bei Realisierung des Wechselrichters durch mehrere einphasige Wechselrichter können mehrere Energiequellen auch je nach Bedarf den den einzelnen Phasen zugeordneten einphasigen Wechselrichtern zugeschaltet werden. Ein derartiges Umschalten von Energiequellen zwischen verschiedenen Wechselrichtern ist grundsätzliche aus der DE 100 61 724A1 bekannt.

Die erfindungsgemäße Vorrichtung ist durch Messeinrichtungen, die Unterschiede zwischen den über die einzelnen Außenleiter fließenden Teilleistungen erfassen, und durch eine Regeleinrichtung, die die Unterschiede durch Einspeisung unterschiedlicher hoher Teilleistungen mit dem Wechselrichter in die einzelnen Außenleiter reduziert, gekennzeichnet. Dabei können die Messeinrichtungen nur die Leistungsflussrichtungen durch die einzelnen Außenleiter, aber auch die über die einzelnen Außenleiter fließenden Teilleistungen oder Ströme und/oder die an den einzelnen Außenleitern anliegenden Effektivspannungen separat messen.

Die Regeleinrichtungen sind zumindest so ausgelegt, dass sie die Leistungsflussrichtungen durch die einzelnen Außenleiter aneinander angleichen. Es können zusätzlich aber auch die Beträge der Teilleistungen, die Beträge der durch die Außenleiter fließenden Ströme und/oder die an den Außenleitern anliegenden Effektivspannungen aneinander angeglichen werden.

Der erfindungsgemäße Wechselrichter ist gekennzeichnet durch eine Steuerung, die ausgebildet ist, um unterschiedlich hohe Teilleistungen in die einzelnen Außenleiter einzuspeisen. Wie bereits angedeutet wurde, ist es vorteilhaft, wenn der Wechselrichter die unterschiedlich hohen Teilleistungen aus einem gemeinsamen Zwischenkreis in die einzelnen Außenleiter einspeist und dies durch die Einspeisung unterschiedlich hoher Ströme in die einzelnen Außenleiter realisiert. Konkret kann der Wechselrichter eine oder mehrere jeweils einen mehrphasigen Ausgangsstrom erzeugende wechselrichtende Schaltungen aufweisen oder je Phase aus einem oder mehreren einphasigen Wechselrichtern aufgebaut sein. Bezüglich der Einspeiseleistung in die einzelnen Phasen ist der Wechselrichter so ausgelegt, dass bei einem dreiphasigen Wechselrichter mindestens 50 % seiner gesamten maximalen Einspeiseleistung, vorzugsweise mindestens 75 % seiner gesamten maximalen Einspeiseleistung, am meisten bevorzugt seine gesamte maximale Einspeiseleistung in einen einzigen Außenleiter einspeisbar ist/sind, um nicht nur im Teillastbereich eine vollständige Konzentration der Einspeiseleistung des mehrphasigen Wechselrichters auf eine einzige Phase des Wechselstromnetzes vornehmen zu können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: skizziert die Durchführung des neuen Verfahrens mit einer ersten Ausführungsform der neuen Vorrichtung und des neuen Wechselrichters; und
- **Fig. 2**: skizziert die Durchführung des neuen Verfahrens mit einer zweiten Ausführungsform der neuen Vorrichtung und dem Wechselrichter gemäß Fig. 1.

### FIGURENBESCHREIBUNG

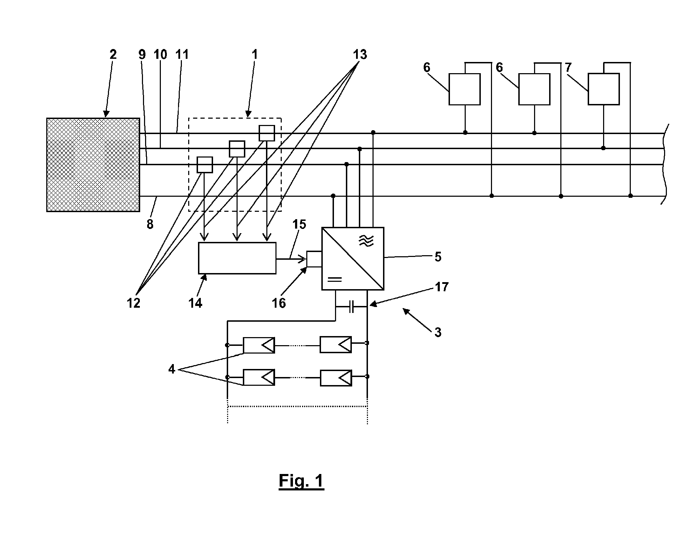

In **Fig. 1** ist ein Netzanschlusspunkt 1 zwischen einem dreiphasigen Wechselstromnetz 2 einerseits und einer Anlage 3 zur Einspeisung elektrischer Energie von mehreren Photovoltaikgeneratoren 4 mit einem Wechselrichter 5 und mehreren elektrischen Verbrauchern 6 und 7 andererseits dargestellt. Die Leitungen des Wechselstromnetzes 2 umfassen einen Nullleiter 8 und drei Außenleiter 9, 10 und 11 für die drei Phasen des Wechselstromnetzes 2. Der Wechselrichter 5 speist in alle drei Außenleiter 9, 10 und 11 ein. Die Verbraucher 6 und 7 sind einphasige Verbraucher, die elektrische Leistung jeweils nur aus einer Phase des Wechselstromnetzes 2 entnehmen. Dabei sind die Verbraucher 6 zwischen den Außenleiter 11 und den Nullleiter 8 und der Verbraucher 7 zwischen dem Außenleiter 10 und den Nullleiter 8 geschaltet. Es können noch mehr Verbraucher als die dargestellten Verbraucher 6 und 7 vorgesehen sein, von denen einige auch zwischen den Außenleiter 9 und den Nullleiter 8 geschaltet sind. Am Netzanschlusspunkt 1 werden mit Messeinrichtungen 12 die über die einzelnen Außenleiter 9 bis 11 fließenden elektrischen Leistungen und insbesondere deren Leistungsflussrichtungen erfasst. Bei den Messeinrichtungen 12 kann es sich um Zähleinrichtungen handeln, die die aus dem Wechselstromnetz 2 bezogene elektrische Energie bzw. die dorthin eingespeiste elektrische Energie phasenweise erfassen. Die Messsignale 13 der Messeinrichtungen 12 werden einer Regeleinrichtung 14 zugeführt, die ein Ansteuersignal 15 an eine Steuerung 16 des Wechselrichters 5 ausgibt. Die Steuerung 16 verteilt die Einspeiseleistung des Wechselrichters 5 auf die einzelnen Außenleiter 9 bis 11. Dabei kann die aktuelle Einspeiseleistung des Wechselrichters 5 auf ein oder zwei der Phasen des Wechselstromnetzes 2 konzentriert werden, da die gesamte Einspeiseleistung über einen Zwischenkreis 17 fließt, an den alle Photovoltaikgeneratoren 4 angeschlossen sind.

Wenn die drei Verbraucher 6 und 7 jeweils einen Verbrauch von einem Drittel der aktuellen Einspeiseleistung des Wechselrichters 5 haben, so würde bei gleichmäßiger Verteilung der Einspeiseleistung des Wechselrichters 5 über die Außenleiter 9 bis 11 über den Außenleiter 11 elektrische Leistung aus dem Wechselstromnetz 2 bezogen werden und über den Außenleiter 9 elektrische Leistung in das Wechselstromnetz 2 eingespeist werden, weil die beiden Verbraucher 6 an den Außenleiter 11 angeschlossen sind und gemeinsam doppelt so viel elektrische Leistung verbrauchen wie dort von dem Wechselrichter 5 bereitgestellt wird, während keiner der Verbraucher 6 und 7 an den Außenleiter 9 angeschlossen ist und die dorthin von dem Wechselrichter 5 eingespeiste Leistung entsprechend in das Wechselstromnetz 2 eingespeist wird. Um diese Situation zu vermeiden, in der sowohl elektrische Energie aus dem Wechselstromnetz 2 bezogen wird als auch elektrische Energie in das Wechselstromnetz 2 eingespeist wird, in der das Wechselstromnetz 2 also unnötig und insbesondere in dem betrachteten Fall nur mit einer Schieflast belastet wird, steuert die Regeleinrichtung 14 die Steuerung 16 des Wechselrichters 5 so an, dass dieser seine Einspeiseleistung in den Außenleiter 11 zu Lasten seiner Einspeiseleistung in den Außenleiter 9 erhöht, bis zumindest alle Leistungsflussrichtungen durch die einzelnen Außenleiter an den Netzanschlusspunkt 1 gleich sind. In dem vorliegend betrachteten Fall würde dann über den Netzanschlusspunkt 1 überhaupt keine elektrische Leistung mehr fließen. Vielmehr würde der Wechselrichter 5 die Verbraucher 6 und 7 im Sinne eines Eigenverbrauchs der vor Ort erzeugten elektrischen Energie versorgen.

Wenn die vor Ort erzeugte elektrische Leistung von der vor Ort verbrauchten elektrischen Leistung insgesamt abweicht, sorgt die Regeleinrichtung 14 durch Ansteuerung der Steuerung 16 des Wechselrichters 5 dafür, dass über alle Außenleiter 9 bis 11 elektrische Leistung in das Wechselstromnetz 2 eingespeist oder elektrische Leistung aus dem Wechselstromnetz 2 bezogen wird. Dies stellt sicher, dass die vor Ort erzeugte elektrische Energie so weit wie möglich vor Ort verbraucht wird. Zugleich wird die unsymmetrische Belastung des Wechselstromnetzes 2 begrenzt. Diese Begrenzung der Schieflast kann noch weiter getrieben werden, indem die Regeleinrichtung 14 auch dafür sorgt, dass die Beträge der über die einzelnen Außenleiter 9 bis 11 fließenden elektrischen Leitungen aneinander angeglichen werden.

Das Wechselstromnetz 2 kann nicht nur ein öffentliches Stromnetz sein, sondern auch beispielsweise durch einen bidirektionalen Batteriewechselrichter als Netzbildner bereitgestellt werden. Dann verhindert die Regeleinrichtung 14 durch Ansteuerung der Steuerung 16 des Wechselrichters 5, dass elektrische Leistung von einer Phase über den bidirektionalen Batteriewechselrichter in eine andere Phase des Wechselstromnetzes 2 umgeleitet werden muss, womit unerwünschte Verlustleistungen verbunden sind. Diese unerwünschten Verlustleistungen treten zudem insbesondere dann auf, wenn in einem Inselnetz, das an einem derartigen Netzbildner angeschlossen ist, ein Mangel an elektrischer Leistung vorliegt, also jeglicher unnötiger Verbrauch an elektrischer Leistung zu vermeiden ist. Die Durchführung des neuen Verfahrens hat daher auch bei Netzanschlusspunkten zwischen Netzbildnern und Inselnetzen erhebliche Vorteile.

Der Wechselrichter 5 kann auch aus drei oder mehr einphasigen Wechselrichtern aufgebaut sein, die elektrische Leistung jeweils nur in einen der Außenleiter 9 bis 11 einspeisen, aber ihrerseits aus denselben Energiequellen, d. h. beispielsweise denselben Photovoltaikgeneratoren gespeist werden oder zumindest, beispielsweise nach Umschalten, speisbar sind, um variable Anteile der insgesamt zur Verfügung stehenden elektrischen Leistungen in die einzelnen Außenleiter 9 bis 11 einzuspeisen.

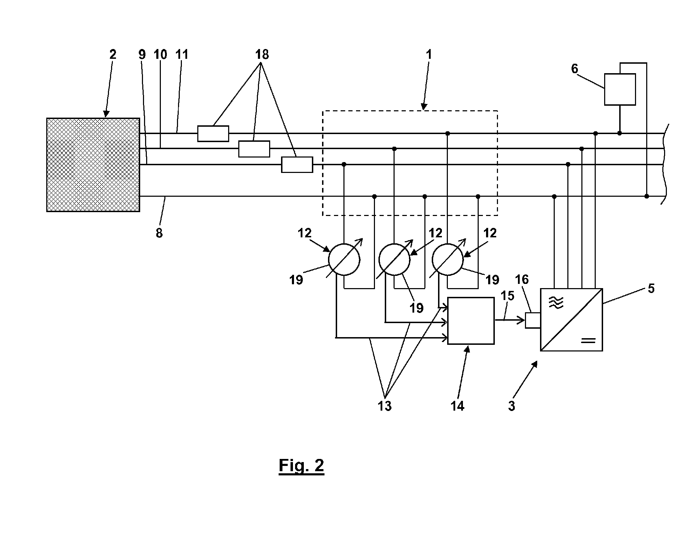

In **Fig. 2** ist durch Widerstände 18 eine hohe Impedanz des Wechselstromnetzes 2 an dem Netzanschlusspunkt 1 angedeutet. Diese Impedanz hat zur Folge, dass bei Entnahme elektrischer Leistung die Netzspannung an dem Netzanschlusspunkt 1 absinkt. Bei selektiver Entnahme der elektrischen Leistung nur aus einem Außenleiter 11, wie hier durch einen Verbraucher 6 angedeutet, sinkt auch nur die Netzspannung auf diesem Außenleiter 11 gegenüber dem Nulleiter 8 ab. Umgekehrt kann eine Unsymmetrie der Netzspannungen auf den einzelnen Außenleitern z. B. auch dadurch entstehen, dass mit einem hier nicht dargestellten zusätzlichen einphasigen Wechselrichter elektrische Energie nur in einen der Außenleiter eingespeist wird und die Netzspannung auf diesem Außenleiter entsprechend ansteigt. In jedem Fall wird die Unsymmetrie der Netzspannungen von den Messeinrichtungen 12, die hier als Voltmeter 19 ausgebildet sind, erfasst. Indem die Regeleinrichtung 14 mit dem Ansteuersignal 15 die mit den Voltmetern 19 gemessenen Spannungen aneinander angleicht, sorgt sie auch hier dafür, dass die unsymmetrische Belastung bzw. Einspeisung reduziert und insbesondere verhindert wird, dass über eine Phase des Wechselstromnetzes 2 elektrische Leistung bezogen wird, während in eine andere Phase des Wechselstromnetzes 2 elektrische Leistung eingespeist wird.

### BEZUGSZEICHENLISTE

- 1: Netzanschlusspunkt
- 2: Wechselstromnetz
- 3: Anlage zur Einspeisung elektrischer Energie
- 4: Photovoltaikgenerator
- 5: Wechselrichter
- 6: Verbraucher
- 7: Verbraucher
- 8: Nullleiter
- 9: Außenleiter
- 10: Außenleiter
- 11: Außenleiter
- 12: Messeinrichtung
- 13: Messsignal
- 14: Regeleinrichtung
- 15: Ansteuersignal
- 16: Steuerung
- 17: Zwischenkreis
- 18: Widerstand
- 19: Voltmeter

## Patentansprüche

1. Verfahren zur Angleichung der Teilleistungen, die an einem Netzanschlusspunkt (1) zwischen einem mehrphasigen Wechselstromnetz (2) mit mehreren Außenleitern (9-11) einerseits und einer Anlage (3) zur Einspeisung elektrischer Energie in das Wechselstromnetz (2) mit einem mehrphasigen Wechselrichter (5) sowie an das Wechselstromnetz angeschlossenen elektrischen Verbrauchern (6, 7) andererseits über die einzelnen Außenleiter (9-11) fließen, **dadurch gekennzeichnet, dass** Unterschiede zwischen den über die einzelnen Außenleiter (9-11) fließenden Teilleistungen erfasst und durch Einspeisung unterschiedlich hoher Teilleistungen mit dem Wechselrichter (5) in die einzelnen Außenleiter (9-11) reduziert werden.

2. Verfahren nach Anspruch 1, **dadurch gekennzeichnet, dass** die Leistungsflussrichtungen durch die einzelnen Außenleiter (9-11) erfasst und miteinander verglichen werden.

3. Verfahren nach Anspruch 1 oder 2, **dadurch gekennzeichnet, dass** die über die einzelnen Außenleiter (9-11) fließenden Teilleistungen separat erfasst und miteinander verglichen werden.

4. Verfahren nach Anspruch 1, 2 oder 3, **dadurch gekennzeichnet, dass** die über die einzelnen Außenleiter (9-11) fließenden Ströme separat erfasst und miteinander verglichen werden.

5. Verfahren nach Anspruch 1, 2 oder 3, **dadurch gekennzeichnet, dass** bei dominierenden Impedanzen zum Wechselstromnetz (2) Unterschiede zwischen den an den einzelnen Außenleitern (9-11) anliegenden Effektivspannungen erfasst und durch Einspeisung unterschiedlich hoher Teilleistungen in die einzelnen Außenleiter (9-11) mit dem Wechselrichter (5) reduziert werden.

6. Verfahren nach mindestens einem der vorhergehenden Ansprüche, **dadurch gekennzeichnet, dass** die unterschiedlich hohen Teilleistungen mit dem Wechselrichter (5) aus einem gemeinsamen Zwischenkreis (17) in die einzelnen Außenleiter (9-11) eingespeist werden.

7. Verfahren nach Anspruch 7, **dadurch gekennzeichnet, dass** die unterschiedlich hohen Teilleistungen mit dem Wechselrichter (5) durch Einspeisung unterschiedlich hoher Ströme aus dem gemeinsamen Zwischenkreis (17) in die einzelnen Außenleiter (9-11) eingespeist werden.

8. Vorrichtung zur Angleichung der Teilleistungen, die an einem Netzanschlusspunkt (1) zwischen einem mehrphasigen Wechselstromnetz (2) mit mehreren Außenleitern (9-11) einerseits und einer Anlage (3) zur Einspeisung elektrischer Energie in das Wechselstromnetz (2) mit einem mehrphasigen Wechselrichter (5) sowie an das Wechselstromnetz (2) angeschlossenen elektrischen Verbrauchern (6, 7) andererseits über die einzelnen Außenleiter (9-11) fließen, insbesondere gemäß dem Verfahren nach mindestens einem der vorhergehenden Ansprüche, **gekennzeichnet durch** Messeinrichtungen (12), die Unterschiede zwischen den über die einzelnen Außenleiter (9-11) fließenden Teilleistungen erfassen, und **durch** eine Regeleinrichtung (14), die die Unterschiede **durch** Einspeisung unterschiedlich hoher Teilleistungen mit dem Wechselrichter (5) in die einzelnen Außenleiter (9-11) reduziert.

9. Vorrichtung nach Anspruch 8, **dadurch gekennzeichnet, dass** die Messeinrichtungen (12)
- die Leistungsflussrichtungen durch die einzelnen Außenleiter (9-11),
- die über die einzelnen Außenleiter (9-11) fließenden Teilleistungen,
- die über die einzelnen Außenleiter (9-11) fließenden Ströme und/oder
- die an den einzelnen Außenleitern (9-11) anliegenden Effektivspannungen separat messen.

10. Vorrichtung nach Anspruch 9, **dadurch gekennzeichnet, dass** die Regeleinrichtung (14)
- die Leistungsflussrichtungen durch die einzelnen Außenleiter (9-11),
- die über die einzelnen Außenleiter (9-11) fließenden Teilleistungen,
- die über die einzelnen Außenleiter (9-11) fließenden Ströme und/oder
- die an den einzelnen Außenleitern (9-11) anliegenden Effektivspannungen aneinander angleicht.

11. Mehrphasiger Wechselrichter (5) zur Angleichung der Teilleistungen, die an einem Netzanschlusspunkt (1) zwischen einem mehrphasigen Wechselstromnetz mit mehreren Außenleitern (9-11) einerseits und einer Anlage (3) zur Einspeisung elektrischer Energie in das Wechselstromnetz (2) mit dem mehrphasigen Wechselrichter (5) sowie an das Wechselstromnetz (2) angeschlossenen elektrischen Verbrauchern (6, 7) andererseits über die einzelnen Außenleiter (9-11) fließen, insbesondere gemäß dem Verfahren nach mindestens einem der vorhergehenden Ansprüche, **gekennzeichnet durch** eine Steuerung (16), um unterschiedlich hohe Teilleistungen in die einzelnen Außenleiter (9-11) einzuspeisen.

12. Wechselrichter nach Anspruch 11, **dadurch gekennzeichnet, dass** der Wechselrichter (5) die unterschiedlich hohen Teilleistungen aus einem gemeinsamen Zwischenkreis (17) in die einzelnen Außenleiter (9-11) einspeist.

13. Wechselrichter nach Anspruch 12, **dadurch gekennzeichnet, dass** der Wechselrichter (5) die unterschiedlich hohen Teilleistungen durch Einspeisung unterschiedlich hoher Ströme aus dem gemeinsamen Zwischenkreis (17) in die einzelnen Außenleiter (9-11) einspeist.

14. Wechselrichter nach mindestens einem der vorhergehenden Ansprüche 11 bis 13, **dadurch gekennzeichnet, dass** der Wechselrichter (5) eine aus dem Zwischenkreis (17) gespeiste mehrphasige Wechselrichterschaltung aufweist oder aus mehreren aus dem Zwischenkreis (17) gespeisten einphasigen Wechselrichtern aufgebaut ist.

15. Wechselrichter nach mindestens einem der vorhergehenden Ansprüche 11 bis 14, **dadurch gekennzeichnet, dass** seine Ausgangsteilstufen so ausgelegt sind, dass mindestens 50 % seiner gesamten maximalen Einspeiseleistung, vorzugsweise mindestens 75% seiner gesamten maximalen Einspeiseleistung, am meisten bevorzugt 100 % seiner gesamten maximalen Einspeiseleistung in einen einzigen Außenleiter (9, 10 oder 11) einspeisbar sind.
